# EUROPEAN PATENT SPECIFICATION

(11) **EP 4 303 105 B1**
(45) Date of publication and mention of the grant of the patent: **18.06.2025**
(21) Application number: 22183751.1
(22) Date of filing: 08.07.2022
(51) Int. Cl.: B62J 6/03, B62J 6/04, B62K 21/12, B62K 21/26, B62J 6/26

(54) **BICYCLE HANDGRIP DEVICE**
FAHRRADGRIFFVORRICHTUNG
DISPOSITIF POIGNÉE DE BICYCLETTE

(43) Date of publication of application: 10.01.2024
(73) Proprietor: VP Components Co., Ltd., Taichung City 438 (TW)
(72) Inventor: LIN, Wen-Hwa, 438 Taichung City (TW)
(74) Representative: Viering, Jentschura & Partner mbB Patent- und Rechtsanwälte

(56) References cited:
- EP-A1- 2 319 748
- WO-A1-2005/035345
- CN-U- 203 780 692
- CN-U- 204 775 643
- CN-U- 213 354 741

## Description

### BACKGROUND OF THE INVENTION

### 1. Field of the Invention:

The present invention relates to a bicycle handgrip device with light.

### 2. Description of the Related Art:

Recently, riding bicycles has become a favorite leisure activity for many people. In addition to riding the bicycle in the daytime, many people also like to ride the bicycle at night. For the consideration of riding safety, bicycle light is one of necessary additional devices.

The conventional bicycle light needs to be clamped on the head, handlebar, or handle of the bicycle through a clamp. However, the bicycle light and the clamp have a certain weight. If the user fails to install the bicycle light at the center of the bicycle head, the weight of the bicycle light and the clamp easily affects the maneuverability of the bicycle during riding. Also, the currently existing bicycle light not only affects the maneuverability during riding, but also is directly exposed to the environment. Therefore, the conventional bicycle light is usually vulnerable to wind and rain.

Besides, the currently existing bicycle light mainly provide lighting of the front for the rider to identify the road conditions at night and in dense fog. However, due to the relatively limited range of light beam projected by the bicycle light, the existing bicycle light fails to effectively notify the vehicles behind to slow down. Therefore, bicycle riders usually need to install additional lights or reflectors at the rear of the bicycle to remind the vehicles behind to slow down in time.

Furthermore, the conventional bicycle handgrip is mostly shaped in a circular tube. Therefore, the riders only hold the handgrip in a single direction and is unable to adjust the gripping angle and position according to their riding habits. Such gripping limitation easily causes discomfort during the riding process.

In order to improve the issues of bicycle light above, WO2005035345A1 shows the preamble of claim 1 and discloses a LIGHTING DEVICE FOR VEHICLES, PARTICULARLY BICYCLES, which includes an illumination device and a cover glass to be disposed on a bicycle.

Also, CN204775643U discloses an indication member, an assistant handgrip and bicycle, including an indication body and an indication light circuit, wherein the indication body is connected to the clamp structure of the bicycle handgrip.

### SUMMARY OF THE INVENTION

To improve the issues above, the present invention discloses a bicycle handgrip device which provides a lighting function and is able to be gripped in different directions, allowing the user to adjust the gripping positions according to user's demand.

For achieving the aforementioned objectives, the present invention provides a bicycle handgrip device, comprising:
a first handgrip defining a first axis, the first handgrip comprising a first connection end and a second connection end on two ends thereof along the first axis, the first handgrip configured for being mounted around a handlebar of a bicycle through the first connection end;
a second handgrip removably disposed on the second connection end of the first handgrip, the second handgrip defining a second axis, the second axis being arranged in perpendicular to the first axis and pointing at a ground surface when in use on the handlebar, wherein the second handgrip comprises a containing portion concavely disposed along the second axis; and
a light disposed in the containing portion of the second handgrip and configured to project a light beam toward the ground surface, wherein the light comprises an illuminating portion and a connecting portion; the illuminating portion faces outward from the containing portion; the connecting portion comprises two position limiting portions protruding on an outer periphery of the connecting portion at intervals, with a fitting member mounted around the connecting portion between the two position limiting portions; the fitting member is fitted with the containing portion; wherein the light is separable from the containing portion of the second handgrip, and a cover is removably disposed in the containing portion of the second handgrip along the second axis.

With such configuration, the present invention contains the light in the handgrip to prevent the weight gain on the bicycle head. Therefore, the present invention resolves the issue of the installation method of the conventional bicycle light which causes the center of gravity thereof to be unstable.

Also, the light of the present invention projects the light beam toward the ground surface, which provides illumination to both the front and the rear directions, improving the riding safety, and improving the issue of the conventional bicycle light which can only project the light beam forward and fails to warn the vehicles behind. Besides, the light is a far-distance and close-distance warning light, so as to reduce the discomfort cause by glare upon the drivers or riders behind.

Furthermore, the first handgrip is perpendicular to the second handgrip, providing different gripping directions to the user, allowing the user to adjust the gripping positions according to different habits and demands, also lowering habitual motion fatigue. Therefore, the present invention improves the issue of the conventional handgrip providing only a single gripping direction which fails to meet the habit of the user.

### BRIEF DESCRIPTION OF THE DRAWINGS

**FIG. 1** is a perspective view in accordance with an embodiment of the present invention.
**FIG. 2** is a perspective view from another point of view in accordance with an embodiment of the present invention.
**FIG. 3** is a front view in accordance with an embodiment of the present invention.
**FIG. 4** is an exploded view in accordance with an embodiment of the present invention.
**FIG. 5** is a perspective view in accordance with an embodiment of the present invention, illustrating the second handgrip combined with the binding member.
**FIG. 6** is a cross-sectional view taken along line **6-6** in **FIG. 1****.**
**FIG. 7** is a schematic view illustrating the present invention being installed on a bicycle.
**FIG. 8** is a perspective view in accordance with another embodiment of the present invention.
**FIG. 9** is a cross-sectional view taken along line 9-9 in **FIG. 8****.**
**FIG. 10** is a perspective view in accordance with another embodiment of the present invention.
**FIG. 11** is an exploded view in accordance with another embodiment of the present invention.

### DETAILED DESCRIPTION OF THE INVENTION

The aforementioned and further advantages and features of the present invention will be understood by reference to the description of the preferred embodiment in conjunction with the accompanying drawings where the components are illustrated based on a proportion for explanation but not subject to the actual component proportion.

The directional terms of, for example, "up", "down", "front", "rear", "left", "right", "inner", "outer", and "side" are only used herein for illustrating the relative directions shown in the drawings. Therefore, the directional terms are applied for the purpose of illustration and understanding of the present invention, instead of limiting the present invention.

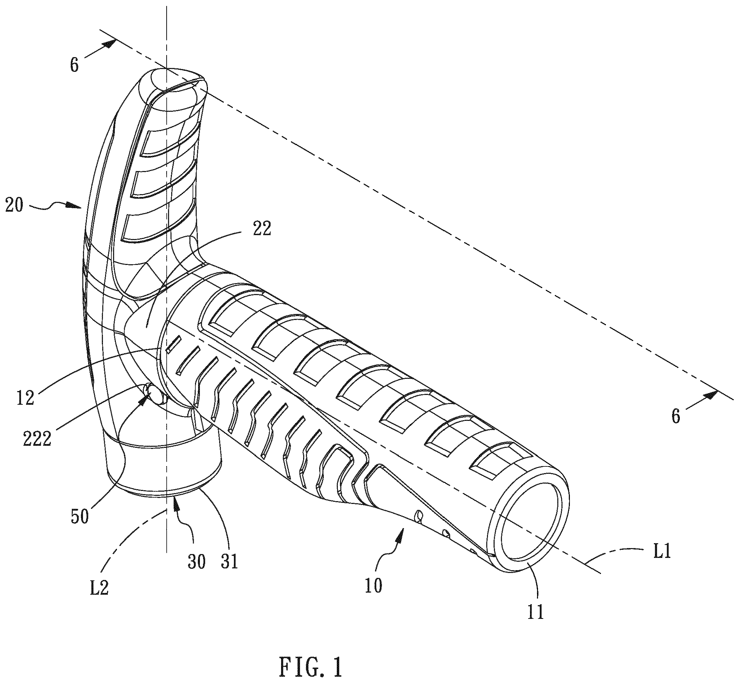

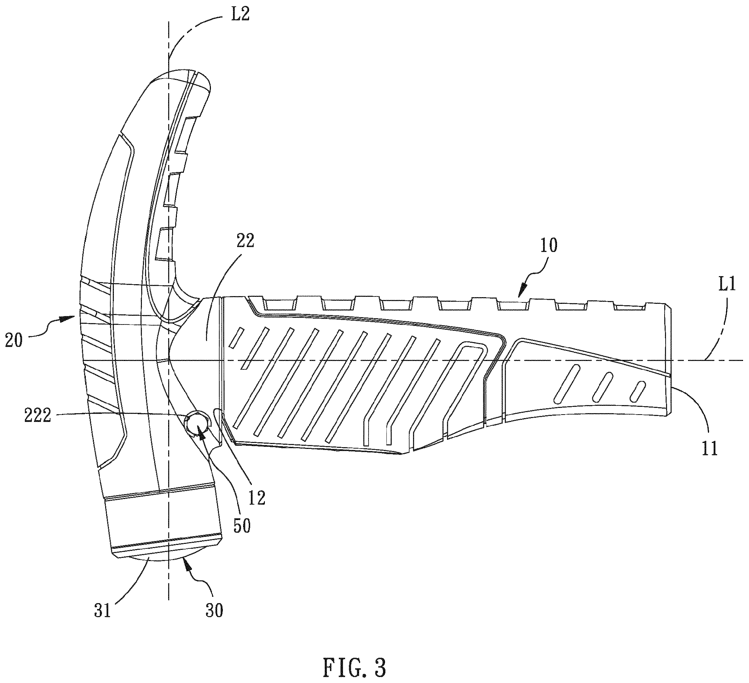

Referring to **FIG. 1** to **FIG. 7****,** the present invention provides a bicycle handgrip device, comprising a first handgrip **10,** a second handgrip **20,** and a light **30.**

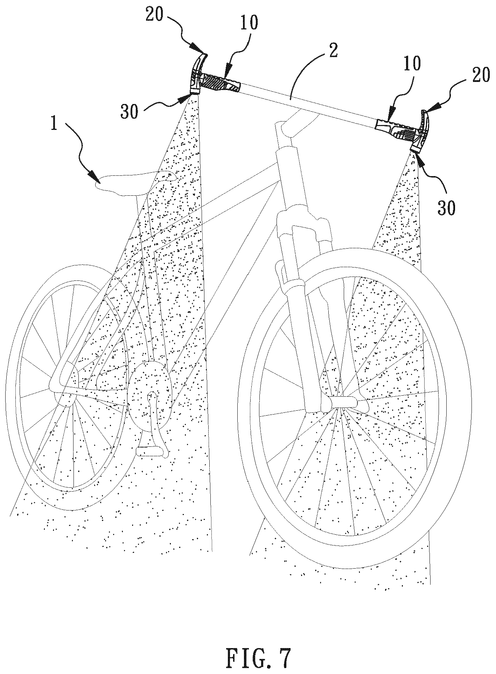

The first handgrip **10** is formed in a hollow circular tube shape. The first handgrip defines a first axis **L1,** which is arranged in parallel to the length direction of the first handgrip **10.** Therein, the first handgrip **10** comprises a first connection end **11** and a second connection end **12** on two ends thereof along the first axis **L1.** The first handgrip **10** is configured for being mounted around the handlebar **2** of the bicycle **1** through the first connection end **11,** as shown by **FIG. 1** and **FIG. 7****.**

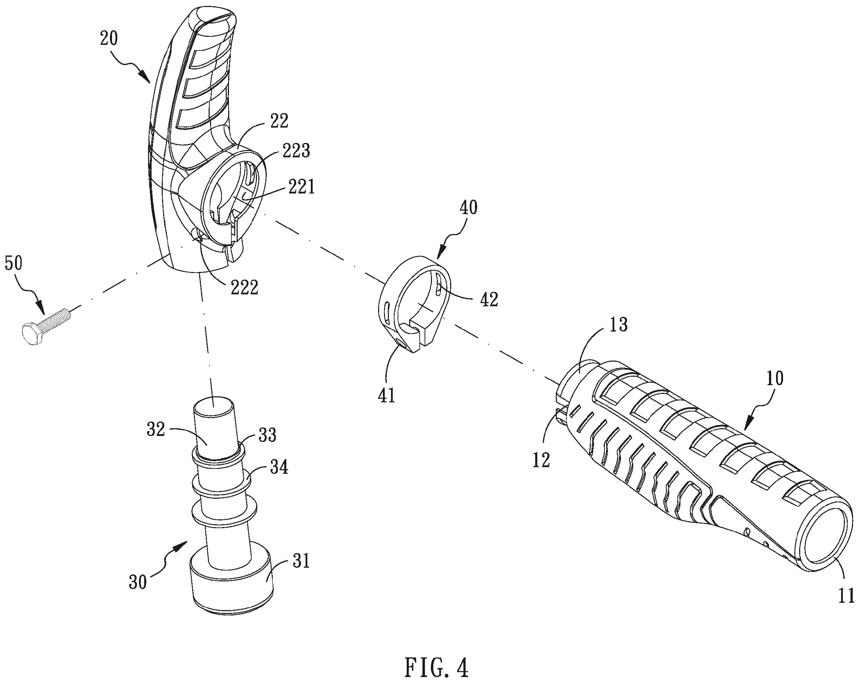

Also, the first handgrip **10** comprises a protrusion ring **13** convexly formed on the second connection end **12** along the first axis **L1,** as shown by **FIG. 4****.** In the embodiment, the sectional face of the protrusion ring **13** is formed in a circular ring shape.

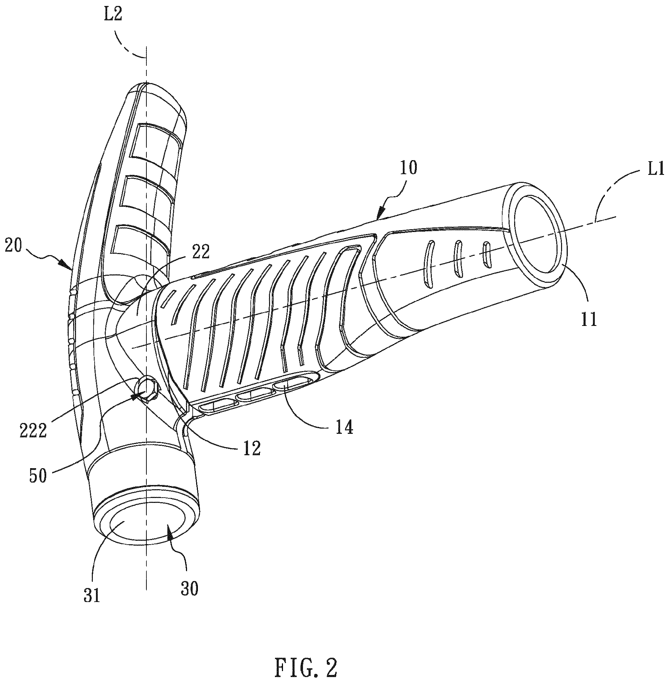

Further, the first handgrip **10** comprises a plurality of bores **14** disposed on a lateral side thereof and communicated with the inner of the first handgrip **10.** In the embodiment, the bores **14** are disposed in adjacent to the second connection end **12** and arranged at intervals along the first axis **L1,** as shown by **FIG. 2****.** When the user grips the first handgrip **10,** the bores **14** are configured to provide an elastic compression space of the first handgrip **10,** improving the gripping comfort of the user.

The second handgrip **20** is removably disposed on the second connection end **12** of the first handgrip **10.** The second handgrip **20** defines a second axis **L2.** The second axis **L2** is perpendicular to the first axis **L1** and points at the ground surface when in use on the handlebar **2,** as shown by **FIG. 1****,** **FIG. 3****,** **FIG. 6****,** and **FIG. 7****.**

The second handgrip **20** comprises a containing portion **21** concavely disposed along the second axis **L2.** In the embodiment, the containing portion **21** is communicated with the inner of the first handgrip **10.** The second handgrip **20** comprises an engagement portion **22** extending outward on one side of the second handgrip **20** in a direction perpendicular to the second axis **L2.** In the embodiment, the engagement portion **22** extends toward the second connection end **12** of the first handgrip **10.**

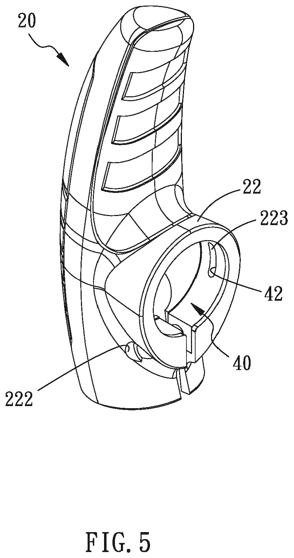

Also, the engagement portion **22** comprises a combining bore **221** and a connecting bore **222.** The combining bore **221** is communicated with the containing portion **21.** The connecting bore **222** is communicated with the combining bore **221.** Therein, the combining bore **221** comprises a positioning portion **223** on a side wall thereof. In the embodiment, two positioning portions **223** are provided protruding on two side walls of the combining bore **221,** as shown by **FIG. 4** and **FIG. 5****.**

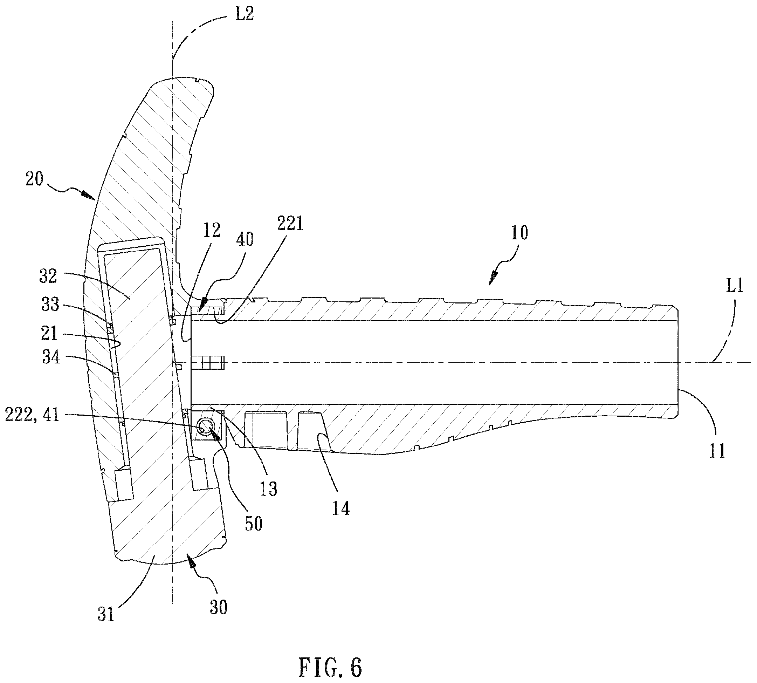

The light **30** is disposed on the second handgrip **20** and projects a light beam toward the ground surface. In the embodiment, the light **30** is disposed in the containing portion **21** of the second handgrip **20.** The light **30** comprises an illuminating portion **31** and a connecting portion **32.** The illuminating portion **31** faces outward from the containing portion **21** and projects the light beam toward the ground surface. The connecting portion **32** comprises two position limiting portions **33** protruding on the outer periphery of the connecting portion **32** at intervals, with a fitting member **34** mounted around the connecting portion **32** between the two position limiting portions **33.** The fitting member **34** is fitted with the containing portion **21.** In the embodiment, the fitting member **34** is formed of a rubber material. The fitting member **34** is configured to tightly fit the light **30** in the containing portion **21** of the second handgrip, as shown by **FIG. 6****.**

Notably, the illuminating portion **31** comprises a light source member and a power supply member. The power supply member provides power to the light source member, allowing the light source member to project the light. The power supply member is allowed to be a battery or connected to an external power cord. The form of the power supply member is not limited in the present invention.

A binding member **40** is connected between the second connection end **12** of the first handgrip **10** and the second handgrip **20.** The binding member **40** comprises a through hole **41** and a positioning bore **42** passing therethrough. In the embodiment, the number of the positioning bore **42** correspond to the number of the positioning portion **223,** so that two positioning bores **42** are provided. Therein, the binding member **40** is embedded in the combining bore **221** of the engagement portion **22.** The two positioning bores **42** and the two positioning portions **223** are combined in a convex-and-concave manner, such that the binding member **40** is mounted around the outer periphery of the protrusion ring **13.**

Further, when the binding member **40** is disposed in the combining bore **221,** the through hole **41** is in positional alignment with the connecting bore **222,** allowing a fastener **50** to pass therethrough, as shown by **FIG. 6****.** In the embodiment, the binding member **40** is a clamp ring, and the screwing tightness of the fastener **50** tightly combines the binding member **40** to the protrusion ring **13** of the first handgrip **10,** increasing the combination stability thereof.

With such configuration, the present invention has the light **30** being installed in the handgrip, preventing additional weight gain of the bicycle head. Therefore, in addition to providing illumination, the present invention assures the stability of the center of gravity of the head of the bicycle **1.**

Also, the light **30** projects the light beam toward the ground surface below, thereby providing illumination to the front and the rear sides and also ensuring the safety of traffic on the road. Also, the light **30** is a far-distance and close-distance warning light, so as to reduce the discomfort cause by glare upon the drivers or riders behind.

In addition, the first handgrip **10** is perpendicular to the second handgrip **20,** providing different gripping directions of the user, allowing the user to adjust the gripping positions according to different habits and demands, also lowering habitual motion fatigue.

Also, the bores **14** are configured to provide an elastic compression space of the first handgrip **10,** improving the gripping comfort of the user.

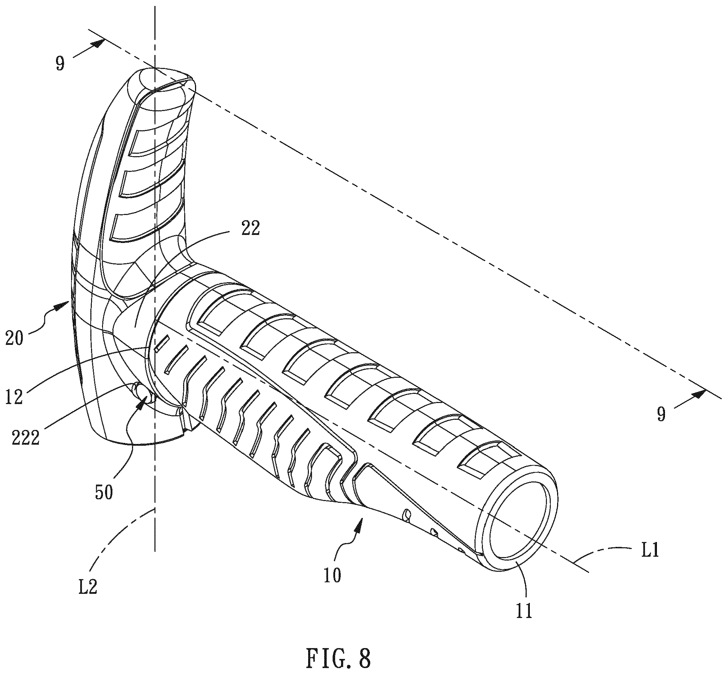

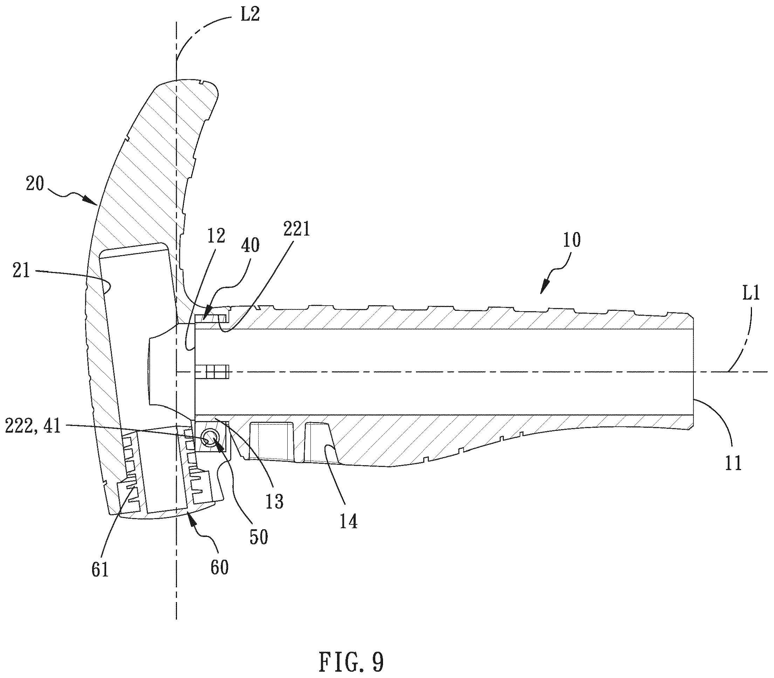

Referring to **FIG. 8** and **FIG. 9****,** in another embodiment of the present invention, the light **30** is able to be separated from the containing portion **21** of the second handgrip **20,** and a cover **60** is able to be removably disposed in the containing portion **21** of the second handgrip **20** along the second axis **L2.** Therein, a plurality of tightening portions **61** are convexly disposed on the outer periphery of the cover **60,** so that the cover **60** is fitted with the containing portion **21** through the tightening portions **61.**

Therefore, the cover **60** seals the open end of the containing portion **21,** preventing dust and dirt from entering the containing portion **21** when the light **30** is removed.

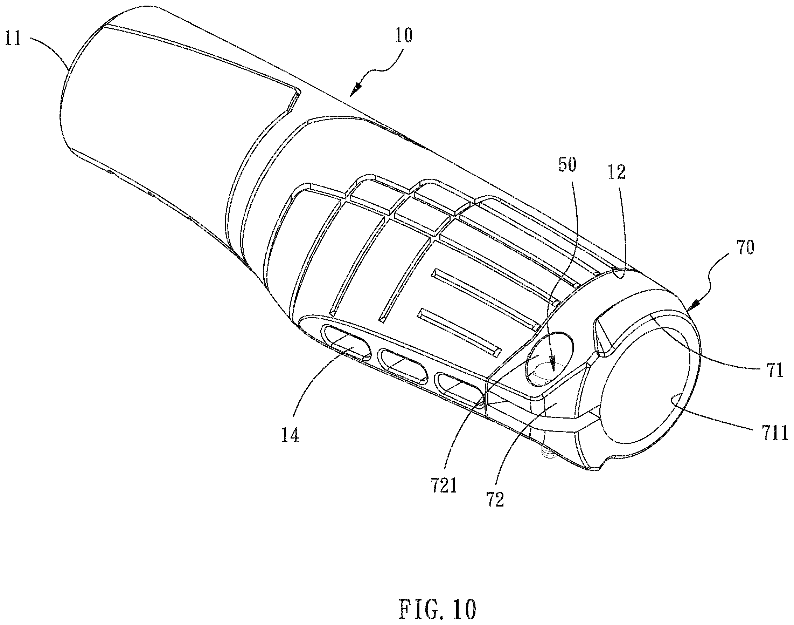

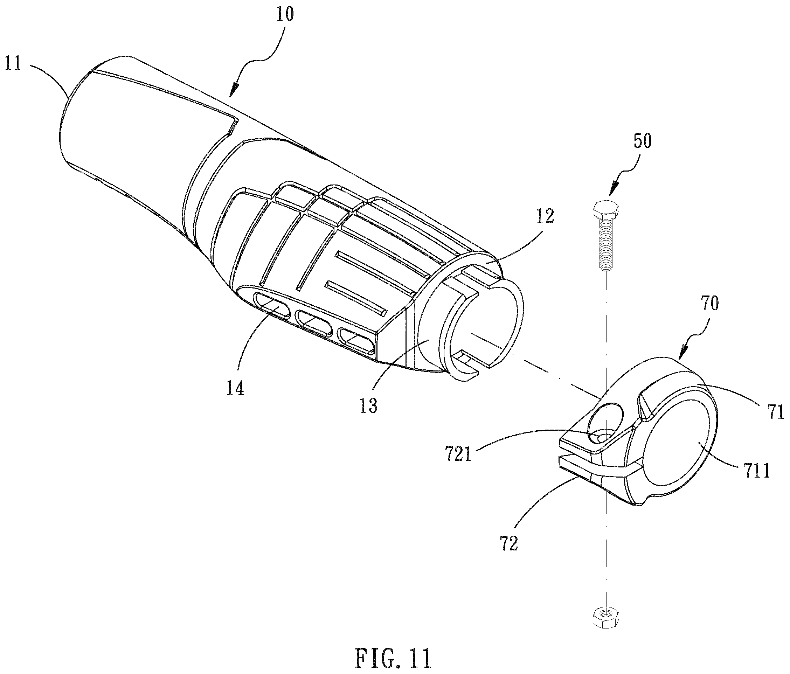

Referring to **FIG. 10** to **FIG. 11****,** in another embodiment of the present invention, the second handgrip **20** is separated from the first handgrip **10,** and an enclosing member **70** is removably disposed on the second connection end **12** of the first handgrip **10** along the first axis **L1.**

Also, the enclosing member **70** comprises a ring sleeve portion **71** and a fastening portion **72** extending from one side of the ring sleeve portion **71.** The ring sleeve portion **71** comprises a sleeve bore **711** passing therethrough. The sleeve bore **711** of the ring sleeve portion **71** is mounted around the protrusion ring **13,** and the fastening portion **72** is accordingly located on the outer side of the protrusion ring **13.** Therein, the fastening portion **72** comprises a penetration bore **721,** through which the fastener **50** passes. The screwing tightness of the fastener **50** tightly combines the enclosing member **70** to protrusion ring **13** of the first handgrip **10,** increasing the combination stability thereof.

Although particular embodiments of the invention have been described in detail for purposes of illustration, various modifications and enhancements may be made without departing from the scope of the invention. Accordingly, the invention is not to be limited except as by the appended claims.

## Claims

1. A bicycle handgrip device, comprising:
a first handgrip (10) defining a first axis (L1), the first handgrip (10) comprising a first connection end (11) and a second connection end (12) on two ends thereof along the first axis (L1), the first handgrip (10) configured for being mounted around a handlebar (2) of a bicycle (1) through the first connection end (11);
a second handgrip (20) removably disposed on the second connection end (12) of the first handgrip (10), the second handgrip (20) defining a second axis (L2), the second axis (L2) being arranged in perpendicular to the first axis (L1) and pointing at a ground surface when in use on the handlebar (2); the second handgrip (20) comprises a containing portion (21) concavely disposed along the second axis (L2); and
a light (30) selectively disposed in the containing portion (21) of the second handgrip (20) and configure to project a light beam toward the ground surface, the light (30) is separable from the containing portion (21) of the second handgrip (20),
the light (30) comprises an illuminating portion (31) and a connecting portion (32); the illuminating portion (31) faces outward from the containing portion (21);
**characterized in that**:
the connecting portion (32) comprises two position limiting portions (33) protruding on an outer periphery of the connecting portion (32) at intervals, with a fitting member (34) mounted around the connecting portion (32) between the two position limiting portions (33); the fitting member (34) is fitted with the containing portion (21),
and wherein the bicycle handgrip device further comprises a cover (60) that is selectively and is removably disposed in the containing portion (21) of the second handgrip (20) along the second axis (L2).

2. The bicycle handgrip device of claim 1, further comprising a binding member (40) connected between the second connection end (12) of the first handgrip (10) and the second handgrip (20) along the first axis (L1).

3. The bicycle handgrip device of claim 2, wherein the second handgrip (20) comprises an engagement portion (22) extending outward on one side of the second handgrip (20) in a direction perpendicular to the second axis (L2); the engagement portion (22) comprises a combining bore (221) which is communicated with the containing portion (21); the binding member (40) is embedded in the combining bore (221) of the engagement portion (22).

4. The bicycle handgrip device of claim 3, wherein the binding member (40) comprises a positioning bore (42) passing therethrough; the combining bore (221) comprises a positioning portion (223) on a side wall thereof; the positioning bore (42) and the positioning portion (223) are combined in a convex-and-concave manner.

5. The bicycle handgrip device of claim 4, wherein the first handgrip (10) comprises a protrusion ring (13) convexly formed on the second connection end (12) along the first axis (L1); the binding member (40) is mounted around an outer periphery of the protrusion ring (13).

6. The bicycle handgrip device of claim 3, wherein the binding member (40) comprises a through hole (41) passing through one end thereof; the engagement portion (22) comprises a connecting bore (222) passing therethrough, and the connecting bore (222) is communicated with the combining bore (221); when the binding member (40) is disposed in the combining bore (221), the through hole (41) is in positional alignment with the connecting bore (222), with a fastener (50) passing through the through hole (41) and the connecting bore (222).

7. The bicycle handgrip device of claim 1, wherein the first handgrip (10) comprises a plurality of bores (14) disposed on a lateral side of the first handgrip (10) and communicated with an inner of the first handgrip (10); the bores (14) are disposed in adjacent to the second connection end (12) and arranged at intervals along the first axis (L1).

8. The bicycle handgrip device of claim 1, further comprising an enclosing member removably disposed on the second connection end (12) of the first handgrip (10) along the first axis (L1); wherein the enclosing member (70) comprises a ring sleeve portion (71); the ring sleeve portion (71) comprises a sleeve bore (711) passing therethrough; the first handgrip (10) comprises a protrusion ring (13) convexly formed on the second connection end (12) along the first axis (L1), and the sleeve bore (711) of the ring sleeve portion (71) is mounted around the protrusion ring (13).

9. The bicycle handgrip device of claim 8, the ring sleeve portion (71) comprises a fastening portion (72) extending from one side of the ring sleeve portion (71); the fastening portion (72) is located on an outer side of the protrusion ring (13); the fastening portion (72) comprises a penetration bore (721), with a fastener (50) passing through the penetration bore (721).

## Patentansprüche

1. Eine Fahrradgriffvorrichtung, umfassend:
einen ersten Handgriff (10), der eine erste Achse (L1) definiert, wobei der erste Handgriff (10) ein erstes Verbindungsende (11) und ein zweites Verbindungsende (12) aufweist, die sich entlang der ersten Achse (L1) an den beiden Enden des ersten Handgriffs (10) befinden, wobei der erste Handgriff (10) derart ausgestaltet ist, dass er über das erste Verbindungsende (11) am Lenker (2) eines Fahrrads (1) montierbar ist;
einen zweiten Handgriff (20), der abnehmbar am zweiten Verbindungsende (12) des ersten Handgriffs (10) angeordnet ist, wobei der zweite Handgriff (20) eine zweite Achse (L2) definiert, wobei die zweite Achse (L2) senkrecht zur ersten Achse (L1) verläuft und bei Verwendung am Lenker in Richtung Bodenoberfläche zeigt, wobei der zweite Handgriff (20) einen Aufnahmeabschnitt (21) aufweist, der entlang der zweiten Achse (L2) hohl ausgebildet ist; und
eine Leuchte (30), die wahlweise im Aufnahmeabschnitt (21) des zweiten Handgriffs (20) angeordnet ist und dazu ausgelegt ist, einen Lichtstrahl in Richtung der Bodenoberfläche zu projizieren, wobei die Leuchte (30) vom Aufnahmeabschnitt (21) des zweiten Handgriffs (20) trennbar ist,
wobei die Leuchte (30) einen Beleuchtungsabschnitt (31) und einen Verbindungsabschnitt (32) aufweist; wobei der Beleuchtungsabschnitt (31) aus dem Aufnahmeabschnitt (21) nach außen zeigt; **dadurch gekennzeichnet, dass** der Verbindungsabschnitt (32) zwei Positionsbegrenzungsabschnitte (33) aufweist, die in Abständen am äußeren Umfang des Verbindungsabschnitts (32) hervorstehen, wobei ein Passstück (34) zwischen den beiden Positionsbegrenzungsabschnitten (33) um den Verbindungsabschnitt (32) herum montiert ist; wobei das Passstück (34) formschlüssig in den Aufnahmeabschnitt (21) eingepasst ist;
und wobei die Fahrradgriffvorrichtung ferner eine Abdeckung (60) umfasst, die wahlweise und abnehmbar im Aufnahmeabschnitt (21) des zweiten Handgriffs (20) entlang der zweiten Achse (L2) angeordnet ist.

2. Fahrradgriffvorrichtung nach Anspruch 1, ferner umfassend ein Einfasselement (40), das zwischen dem zweiten Verbindungsende (12) des ersten Handgriffs (10) und dem zweiten Handgriff (20) entlang der ersten Achse (L1) angeordnet ist.

3. Fahrradgriffvorrichtung nach Anspruch 2, wobei der zweite Handgriff (20) einen Eingriffsabschnitt (22) aufweist, der sich an einer Seite des zweiten Handgriffs (20) in einer Richtung senkrecht zur zweiten Achse (L2) nach außen erstreckt; wobei der Eingriffsabschnitt (22) ein Kombinationsloch (221) aufweist, das mit dem Aufnahmeabschnitt (21) in Verbindung steht; wobei das Einfasselement (40) in das Kombinationsloch (221) des Eingriffsabschnitts (22) eingesetzt ist.

4. Fahrradgriffvorrichtung nach Anspruch 3, wobei das Einfasselement (40) ein Positionierungsloch (42) aufweist, das hindurch verläuft; wobei das Kombinationsloch (221) an einer Seitenwand ein Positionierungsabschnitt (223) aufweist; wobei das Positionierungsloch (42) und der Positionierungsabschnitt (223) in einer Vorsprung-Rücksprung-Weise miteinander kombiniert sind.

5. Fahrradgriffvorrichtung nach Anspruch 4, wobei der erste Handgriff (10) einen Vorsprungsring (13) aufweist, der am zweiten Verbindungsende (12) entlang der ersten Achse (L1) hervorstehend ausgebildet ist; wobei das Einfasselement (40) um den äußeren Umfang des Vorsprungsrings (13) montiert ist.

6. Fahrradgriffvorrichtung nach Anspruch 3, wobei das Einfasselement (40) ein Durchgangsloch (41) aufweist, das durch ein Ende davon verläuft; wobei der Eingriffsabschnitt (22) eine Verbindungsbohrung (222) aufweist, die hindurch verläuft und die Verbindungsbohrung (222) mit dem Kombinationsloch (221) in Verbindung steht; wobei, wenn das Einfasselement (40) in das Kombinationsloch (221) eingesetzt ist, das Durchgangsloch (41) mit der Verbindungsbohrung (222) fluchtend angeordnet ist, wobei ein Befestigungselement (50) durch das Durchgangsloch (41) und die Verbindungsbohrung (222) verläuft.

7. Fahrradgriffvorrichtung nach Anspruch 1, wobei der erste Handgriff (10) mehrere Löcher (14) aufweist, die seitlich vom ersten Handgriff 10 angeordnet sind und mit dem Innenraum des ersten Handgriffs (10) in Verbindung stehen; wobei sich die Löcher (14) in der Nähe des zweiten Verbindungsendes (12) befinden und in Abständen entlang der ersten Achse (L1) angeordnet sind.

8. Fahrradgriffvorrichtung nach Anspruch 1, ferner umfassend ein Umfassungselement (70), das entlang der ersten Achse (L1) abnehmbar am zweiten Verbindungsende (12) des ersten Handgriffs (10) angeordnet ist; wobei das Umfassungselement (70) einen Ringhülsenabschnitt (71) aufweist; wobei der Ringhülsenabschnitt (71) ein Hülsenloch (711) aufweist, das hindurch verläuft; wobei der erste Handgriff (10) einen Vorsprungsring (13) aufweist, der am zweiten Verbindungsende (12) entlang der ersten Achse (L1) hervorstehend ausgebildet ist, und das Hülsenloch (711) des Ringhülsenabschnitts (71) um den Vorsprungsring (13) montiert ist.

9. Fahrradgriffvorrichtung nach Anspruch 8, wobei der Ringhülsenabschnitt (71) einen Befestigungsabschnitt (72) aufweist, der sich von einer Seite des Ringhülsenabschnitts (71) erstreckt; wobei der Befestigungsabschnitt (72) an der Außenseite des Vorsprungsrings (13) positioniert ist; wobei der Befestigungsabschnitt (72) eine Durchführbohrung (721) aufweist, mit einem Befestigungselement (50), das durch die Durchführbohrung (721) hindurchgeführt ist.

## Revendications

1. - Dispositif de poignée de bicyclette, comprenant :
une première poignée (10) définissant un premier axe (L1), la première poignée (10) comprenant une première extrémité de liaison (11) et une seconde extrémité de liaison (12) sur deux extrémités de celle-ci le long du premier axe (L1), la première poignée (10) étant configurée pour être montée autour d'un guidon (2) d'une bicyclette (1) à travers la première extrémité de liaison (11) ;
une seconde poignée (20) disposée de manière amovible sur la seconde extrémité de liaison (12) de la première poignée (10), la seconde poignée (20) définissant un second axe (L2), le second axe (L2) étant disposé perpendiculairement au premier axe (L1) et pointant vers une surface de sol lorsqu'elle est utilisée sur le guidon (2) ; la seconde poignée (20) comprenant une partie de réception (21) disposée de manière concave le long du second axe (L2) ; et
une lumière (30) disposée de manière sélective dans la partie de réception (21) de la seconde poignée (20) et configurée pour projeter un faisceau lumineux vers la surface de sol, la lumière (30) étant séparable de la partie de réception (21) de la seconde poignée (20),
la lumière (30) comprend une partie d'éclairage (31) et une partie de liaison (32) ; la partie d'éclairage (31) est orientée vers l'extérieur de la partie de réception (21) ;
**caractérisé par le fait que** la partie de liaison (32) comprend deux parties de limitation de position (33) faisant saillie sur une périphérie extérieure de la partie de liaison (32) à des intervalles, avec un élément d'ajustement (34) monté autour de la partie de liaison (32) entre les deux parties de limitation de position (33) ; l'élément d'ajustement (34) est ajusté à la partie de réception (21), et le dispositif de poignée de bicyclette comprenant en outre un capuchon (60) qui est disposé de manière sélective et amovible dans la partie de réception (21) de la seconde poignée (20) le long du second axe (L2).

2. - Dispositif de poignée de bicyclette selon la revendication 1, comprenant en outre un élément de raccordement (40) relié entre la seconde extrémité de liaison (12) de la première poignée (10) et la seconde poignée (20) le long du premier axe (L1).

3. - Dispositif de poignée de bicyclette selon la revendication 2, dans lequel la seconde poignée (20) comprend une partie d'engagement (22) s'étendant vers l'extérieur sur un côté de la seconde poignée (20) dans une direction perpendiculaire au second axe (L2) ; la partie d'engagement (22) comprend un alésage de combinaison (221) qui est en communication avec la partie de réception (21) ; l'élément de raccordement (40) est encastré dans l'alésage de combinaison (221) de la partie d'engagement (22).

4. - Dispositif de poignée de bicyclette selon la revendication 3, dans lequel l'élément de raccordement (40) comprend un alésage de positionnement (42) passant à travers celui-ci ; l'alésage de combinaison (221) comprend une partie de positionnement (223) sur une paroi latérale de celui-ci ; l'alésage de positionnement (42) et la partie de positionnement (223) sont combinés de manière convexe et concave.

5. - Dispositif de poignée de bicyclette selon la revendication 4, dans lequel la première poignée (10) comprend un anneau en saillie (13) formé de manière convexe sur la seconde extrémité de liaison (12) le long du premier axe (L1) ; l'élément de raccordement (40) est monté autour d'une périphérie extérieure de l'anneau en saillie (13).

6. - Dispositif de poignée de bicyclette selon la revendication 3, dans lequel l'élément de raccordement (40) comprend un trou traversant (41) passant à travers une extrémité de celui-ci ; la partie d'engagement (22) comprend un alésage de liaison (222) passant à travers celui-ci, et l'alésage de liaison (222) est en communication avec l'alésage de combinaison (221) ; lorsque l'élément de raccordement (40) est disposé dans l'alésage de combinaison (221), le trou traversant (41) est en alignement de position avec l'alésage de liaison (222), avec un organe de fixation (50) passant à travers le trou traversant (41) et l'alésage de liaison (222).

7. - Dispositif de poignée de bicyclette selon la revendication 1, dans lequel la première poignée (10) comprend une pluralité d'alésages (14) disposés sur un côté latéral de la première poignée (10) et communiquant avec l'intérieur de la première poignée (10) ; les alésages (14) sont disposés adjacents à la seconde extrémité de liaison (12) et ménagés à intervalles le long du premier axe (L1).

8. - Dispositif de poignée de bicyclette selon la revendication 1, comprenant en outre un élément de fermeture disposé de manière amovible sur la seconde extrémité de liaison (12) de la première poignée (10) le long du premier axe (L1) ; l'élément de fermeture (70) comprenant une partie manchon annulaire (71) ; la partie manchon annulaire (71) comprenant un alésage de manchon (711) passant à travers celle-ci ; la première poignée (10) comprenant un anneau en saillie (13) formé de manière convexe sur la seconde extrémité de liaison (12) le long du premier axe (L1), et l'alésage de manchon (711) de la partie manchon annulaire (71) est monté autour de l'anneau en saillie (13).

9. - Dispositif de poignée de bicyclette selon la revendication 8, la partie manchon annulaire (71) comprenant une partie de fixation (72) s'étendant à partir d'un côté de la partie manchon annulaire (71) ; la partie de fixation (72) étant située sur un côté extérieur de l'anneau en saillie (13) ; la partie de fixation (72) comprenant un alésage de pénétration (721), avec un organe de fixation (50) passant à travers l'alésage de pénétration (721).
